# DEMANDE DE BREVET EUROPEEN

(11) **EP 0 627 392 A1**
(43) Date de publication de la demande: **07.12.1994**
(21) Numéro de dépôt: 94108560.7
(22) Date de dépôt: 03.06.1994
(51) Int. Cl.: C04B 41/53, B44C 1/22

(54) **Procédé de gravure chimique sur substrats rocheux**

(30) Priorité: 04.06.1993 TN 9306093; 15.02.1994 FR 9401951
(71) Demandeur: Lachter, Mohamed Sadek, Marsa Safsaf 2078 (TN)
(72) Inventeur: Lachter, Mohamed Sadek, Marsa Safsaf 2078 (TN)
(74) Mandataire: Patentanwälte Viering, Jentschura & Partner

(57) **Abrégé**

L'invention concerne un procédé de gravure chimique sur substrats rocheux , où les réserves sont imprimées sur le support par une gomme résistante aux bains chimiques, ou traitées photomécaniquement à partir d'une gélatine photosensible ( pré-appliquée sur le support), résistante aux bains chimiques.
- Applications :: - Revêtements décoratifs sols et murs
- Ameublement
- Plaques de signalisation de cités et professionnelles
- Monuments commémoratifs
- Stèles funéraires
- Pierres tombales
-Trophées
- Publicité etc ...

## Description

La présente invention a pour objet un procédé de gravure chimique sur substrats rocheux.

Il concerne le domaine industriel de la gravure sur le marbre, le granit et autres roches, ainsi que sur toutes matières à composition calcaire.

La gravure chimique en elle même est très ancienne. Elle a été initialement utilisée en tant que mode d'expression artistique (eau forte, estampe et autres), et son évolution lui a permis d'investir plusieurs domaines de l'industrie moderne, et en particulier les arts graphiques, essentiellement dans la gravure des métaux.

A ce jour, en dehors du procédé classique purement artisanal de gravure sur marbre au burin ou ciseau, la gravure de substrats rocheux est le plus souvent effectuée grâce à deux méthodes:
- Premièrement, la technique dite au jet de sable: Cette dernière utilise un masque dur recouvrant les réserves, les parties non protégées étant gravées ou dépolies par exposition à un jet de sable.
- Deuxièmement, la technique dite "procédé de reproduction analytique", qui est essentiellement mécanique.

Les deux précédentes techniques restent tributaires d'interventions manuelles dans différentes phases de leur exécution, et se heurtent à plus d'un inconvénient, à savoir:
- Résultat technique limité
- Exécution fastidieuse
- Reproduction industrielle lente et coûteuse.

La présente invention permet de supprimer ces inconvénients, et de promouvoir la gravure sur marbre ou autres supports rocheux à l'échelle industrielle.

Le procédé selon l'invention, qui représente une extension d'application des techniques de gravure chimique pré-citées, permet à un substrat rocheux de subir les gravures par morsure chimique les plus complexes, qu'il s'agisse de textes ou de graphismes.

Ce procédé consiste à pratiquer sur le substrat préalablement lustré, soit la création de réserves destinées à protéger les parties en relief et réalisées par impression directe ou par un traitement photomécanique similaire à celui employé pour l'impression typographique, les parties non protégées par lesdites réserves étant ensuite gravées par bain chimique, soit l'impression du sujet à graver en utilisant une pâte acide en guise d'encre.

La description détaillée ci-après se rapporte à des exemples non limitatif de formes de réalisation de l'objet de l'invention.

Le principe de base du procédé consiste à utiliser les techniques d'impression classiques utilisées normalement avec les supports papier ou similaires, pour faciliter la gravure de plaques de marbre ou d'autres substrats rocheux pré-lustrés.

Dans un premier mode de réalisation, on imprime le sujet à graver par sérigraphie ou technique similaire, en remplaçant l'encre par une pâte acide. Le résultat obtenu est une gravure peu profonde ou un dépolissage des zones en contact avec la pâte acide.

Dans un second mode de réalisation, la surface du substrat rocheux à graver est tout d'abord revêtue, par impression directe ou par photogravure, d'une couche de protection résistant à l'agent chimique de gravure, adhérant parfaitement sur ladite surface et ne recouvrant que les parties ne devant pas être attaquées. Puis le substrat est soumis à un bain chimique de gravure, par exemple à base d'acide minéral tel que l'acide nitrique.

Dans le cas de l'impression directe, le procédé consiste à imprimer en négatif le sujet à graver sur le substrat rocheux, à l'aide d'un dispositif offset, flexographique ou sérigraphique, adapté aux plaques de marbres (ou autres supports à composition calcaire).

L'impression s'effectue avec une gomme résistante au bain chimique en guise d'encre. La gomme pourra avantageusement être teintée afin de permettre d'apprécier visuellement la fidélité de l'impression du sujet à graver.

Grâce à sa parfaite adhésion sur le support, la gomme, une fois sèche, fera office de pochoir ou cache délimitant des réserves et permettant ainsi l'exposition des parties nues constituant le sujet à graver à l'attaque du bain chimique.

Dans le cas de la photogravure, le principe de l'invention consiste à couvrir la surface à graver du substrat pré-lustré par une gélatine émulsion photosensible résistante au bain chimique, et à lui faire subir un traitement photochimique connu à travers un cliché photographique du sujet à graver préalablement réalisé. Cette dernière opération permet de fixer ladite gélatine sur les réserves et de dégarnir les zones à graver, de manière à ce que seules les parties nues soient exposées aux attaques de l'agent chimique.

L'utilisation de réserves et d'un bain chimique permet, grâce au procédé selon l'invention, de réaliser la découpe et le perçage de plaques rocheuses minces permettant ainsi la réalisation de lettres, chiffres ou motifs divers, mobiles et en relief. Les réserves imprimées auront la forme des motifs à obtenir, et les zones nues seront exposées au bain chimique jusqu'à ce que la plaque soit complètement traversée.

Le procédé de gravure selon l'invention trouve de nombreuses applications, et parmi celles-ci:
- Revêtements décoratifs de sols, ou de murs
- Ameublement
- Plaques de signalisation de cités
- Plaques professionnelles
- Monuments commémoratifs
- Stèles funéraires, pierres tombales
- Publicité
- etc...

Le positionnement des divers éléments constitutifs donne à l'objet de l'invention un maximum d'effets utiles qui n'avaient pas été, à ce jour, obtenus par des applications similaires.

## Revendications

1. Procédé de gravure chimique sur substrats rocheux, applicable sur le marbre, le granit et autres roches, ainsi que sur toutes matières à composition calcaire,
caractérisé en ce que le substrat rocheux, préalablement lustré, est gravé par un agent chimique en se servant des techniques d'impression classiques utilisées habituellement pour les supports papier ou similaires.

2. Procédé selon la revendication 1, se caractérisant par le fait que la surface du substrat rocheux à graver est revêtue, par impression directe au moyen d'un dispositif offset, flexographique, sérigraphique ou similaire, d'une couche de protection résistant à l'agent chimique de gravure, adhérant parfaitement sur ladite surface et ne recouvrant que les parties ne devant pas être attaquées, le substrat étant ensuite soumis à un bain chimique de gravure.

3. Procédé selon la revendication 2, se caractérisant par le fait que la couche de protection est teintée afin de permettre le contrôle visuel de la fidélité de l'impression du sujet à graver.

4. Procédé selon la revendication 1, se caractérisant par le fait que la surface du substrat rocheux à graver est revêtue d'une gélatine émulsion photosensible résistant à l'agent chimique de gravure, puis subit un traitement photochimique connu à travers un cliché photographique du sujet à graver préalablement réalisé, de manière à fixer ladite gélatine sur les réserves et de dégarnir les zones à graver, le substrat étant ensuite soumis à un bain chimique de gravure.

5. Procédé selon l'une quelconque des revendications précédentes, se caractérisant par le fait qu'il est utilisé pour réaliser la découpe et le perçage de plaques rocheuses minces de manière à réaliser des motifs divers tels que lettres, chiffres ou autres, mobiles et en relief, les réserves imprimées ayant la forme des motifs à obtenir, le substrat étant exposées au bain chimique jusqu'à ce que la plaque soit complètement traversée à l'emplacement des zones nues.

6. Procédé selon la revendication 1, se caractérisant par le fait que le sujet à graver est imprimé sur le substrat rocheux par sérigraphie ou technique similaire, en remplaçant l'encre par une pâte acide jouant le rôle d'agent chimique de gravure, de manière à obtenir une gravure peu profonde ou un dépolissage des zones en contact avec ladite pâte acide.

7. Procédé selon l'une quelconque des revendications précédentes, se caractérisant par le fait que l'agent chimique de gravure est à base d'acide minéral.

8. Procédé selon la revendication 1, se caractérisant par le fait que l'agent chimique de gravure est à base d'acide nitrique.
